# EUROPÄISCHE PATENTSCHRIFT

(11) **EP 2 456 650 B1**
(45) Veröffentlichungstag und Bekanntmachung des Hinweises auf die Patenterteilung: **01.05.2013**
(21) Anmeldenummer: 10742094.5
(22) Anmeldetag: 23.07.2010
(51) Int. Cl.: B61C 17/04, B61D 33/00, A47C 1/126, B60N 2/30

(54) **STRASSENBAHNFAHRZEUG MIT EINER ZUSÄTZLICHEN KLAPPBAREN SITZEINRICHTUNG FÜR DEN FAHRERSTAND**
TROLLEY CAR VEHICLE HAVING AN ADDITIONAL COLLAPSIBLE SEATING ARRANGEMENT FOR THE OPERATOR` S CAB
TRAMWAY DOTÉ D'UN SIÈGE RABATTABLE SUPPLÉMENTAIRE POUR LA CABINE DE CONDUITE

(30) Priorität: 24.07.2009 DE 102009034681
(43) Veröffentlichungstag der Anmeldung: 30.05.2012
(73) Patentinhaber: Bombardier Transportation GmbH, 10785 Berlin (DE)
(72) Erfinder: GRZESIUK, Tomasz, 1120 Wien (AT); BRAND, Martin, 1220 Wien (AT); LANGER, Martin, 1200 Wien (AT)
(74) Vertreter: Bressel, Burkhard
(86) Internationale Anmeldenummer: PCT/EP2010/004763
(87) Internationale Veröffentlichungsnummer: WO 2011/009643

(56) Entgegenhaltungen:
- EP-A1- 1 864 850
- FR-A1- 2 668 909
- FR-A1- 2 811 620
- GB-A- 2 140 283

## Beschreibung

### Gebiet der Erfindung:

Die vorliegende Erfindung betrifft ein Straßenbahnfahrzeug, umfassend einen Fahrerstand mit einem Fahrersitz und einem Geschränk.

### Stand der Technik:

Klappbare Sitze werden für unterschiedliche Zwecke vorgesehen. Beispielsweise sind diese in öffentlichen Verkehrsmitteln installiert, um Sitzplätze anbieten zu können, die in unbenutztem Zustand Raum sparend angeordnet sind. Derartige Sitze sind insbesondere dann bevorzugt, wenn der verfügbare Raum flexibel für Steh- und Sitzplätze reserviert werden soll. In diesem Falle können diese Sitze dadurch gekennzeichnet sein, dass die Sitzfläche um eine horizontale Achse verschwenkbar ist und an die Rückenlehne geklappt werden kann, so dass der von der Sitzfläche eingenommene Platz anderweitig, beispielsweise für stehende Passagiere oder für Gepäck, frei wird.

Im deutschen Gebrauchsmuster 1 850 045 ist beispielsweise ein Mehrplatz-Doppel-Klappsitz für Schienenfahrzeuge beschrieben, der vorteilhaft eingesetzt wird, um einen Gepäckraum in Triebwagen, Steuerwagen und Beiwagen mit Klappsitzen für Reisende auszurüsten, so dass der mitgeführte Raum bei freiem Gepäckraum für die Beförderung von Personen genutzt werden kann. Hierzu sind zwei Mehrplatz-Klappsitzflächen mit einer gemeinsamen Rückenlehne verbunden, wobei diese Klappsitzflächen mit der Rückenlehne eine zusammenlegbare und gegen die Wand des Fahrzeuges hoch- und abklappbare Sitzeinheit bilden.

Ein Notsitz insbesondere für einen Krankenwagen ist in DE 102 17 794 A1 angegeben. Dieser weist eine Sitzfläche und eine Rückenlehne sowie eine Kopfstütze auf. Das Oberteil der Rückenlehne ist insbesondere zusammen mit der Kopfstütze um eine Hochachse verschwenkbar. Durch die Verschwenkbarkeit der Rückenlehne und der Kopfstütze wird erreicht, dass Fahrzeug-Einrichtungen im hinteren Teil des Krankenwagens, beispielsweise ein Waschbecken, für einen Arzt oder Sanitäter leicht zugänglich sind.

Eine Hilfs-Sitzeinrichtung für ein Kraftfahrzeug ist in FR 2 761 309 A angegeben. Die Rückenlehne und die Sitzfläche dieser Sitzeinrichtung sind an einer Seitenwand des Fahrzeuges befestigt. Die Rückenlehne ist an der Wand in senkrechter Stellung und in einer der beschriebenen Ausführungsformen zudem horizontal verschiebbar befestigt. Die Sitzfläche ist um eine horizontale Achse drehbar und ebenfalls horizontal verschiebbar an dieser Seitenwand befestigt. Somit kann die Sitzfläche neben der Rückenlehne im hochgeklappten Zustand verstaut werden, so dass diese beiden Sitzteile Platz sparend untergebracht werden können.

Eine andere Sitzeinrichtung, die zur optimierten Raumausnutzung in einem Kraftfahrzeug dient, ist der in US 4,580,832 A beschriebene Hilfs-Klappsitz. Dieser ist an einem Seitenteil des Fahrzeugs befestigt. Das Seitenteil bildet eine Mulde, so dass der Sitz im zugeklappten Zustand in dieser Mulde aufgenommen wird.

Um beispielsweise den Platz in einem Fahrzeug auch für Gepäck optimal ausnutzen zu können, ist in US 2003/0193205 A1 ein klappbarer Sitz beschrieben, dessen Rückenlehne und Sitzfläche in einer im Wesentlichen zueinander parallelen und zueinander fluchtenden Position angeordnet werden können, indem Stützeinheiten und mit diesen verbundene bewegliche Tragrahmen vorgesehen sind und das Sitzpolster an jeweils einem vorderen Ende der Tragrahmen und die Rückenlehne an jeweils einem hinteren Ende der Tragrahmen drehbar befestigt sind, so dass das Sitzpolster und die Rückenlehne in die zuvor angegebenen Positionen verschwenkt werden können. Der Sitz kann dann in einer Mulde im Fahrzeugboden versenkt werden. Derartige Sitze werden beispielsweise in Minivans verwendet, um den normalerweise für Fahrgäste vorgesehenen Innenraum für Gepäck zu reservieren.

US-Patent Nr. 808,679 gibt ferner einen Sitz in einem Kraftfahrzeug an, der bedarfsweise unter einem benachbarten Sitz verstaut werden kann, indem der Sitz in zusammen geklapptem Zustand unter dem benachbarten Sitz hängend eingeschoben werden kann.

Ferner ist in FR 2 811 620 A1 ein Hilfssitz für ein Kraftfahrzeug beschrieben, dessen Sitzfläche und Rückenlehne zusammenklappbar sind und der im zusammengeklappten Zustand in eine Kassette unter der Sitzfläche eines Sitzes von der Seite aus einschiebbar ist.

Derartige Lösungen zur Platz sparenden Anordnung einer Sitzeinrichtung sind jedoch nicht geeignet, um sie in einem Fahrerstand in einem Schienenfahrzeug einzusetzen. Zusätzlich zu einer Sitzeinrichtung für den Fahrer des Schienenfahrzeuges wird im Allgemeinen eine weitere Sitzeinrichtung für eine weitere im Fahrerstand gelegentlich mitfahrende Person, beispielsweise einen Fahrlehrer, benötigt. Da der Fahrerstand üblicherweise klein ausgelegt ist, darf diese zusätzliche Sitzeinrichtung dann keinen oder zumindest kaum zusätzlichen Platz beanspruchen, wenn diese weitere Sitzeinrichtung nicht benötigt wird. Außerdem muss diese weitere Sitzeinrichtung in eine Platz sparende Parkposition auch einfach überführbar sein. Die bekannten Sitzeinrichtungen haben den Nachteil, dass sie zumindest beim Überführen von der Nutzposition in die Parkposition einen relativ großen Manövrierraum benötigen.

### Aufgabe:

Von daher besteht eine Aufgabe der vorliegenden Erfindung darin, eine Lösung für die vorstehenden Probleme zu finden und insbesondere ein Straßenbahnfahrzeug anzugeben, in deren Fahrerstand eine zusätzliche Sitzeinrichtung untergebracht werden kann, wobei die Sitzeinrichtung leicht und ohne wesentlichen zusätzlichen Raumbedarf von einer Nutzposition in eine Parkposition und umgekehrt überführbar ist.

### Beschreibung der Erfindung:

Diese Aufgabe wird durch das Straßenbahnfahrzeug gemäß Anspruch 1 gelöst. Bevorzugte Ausführungsformen der Erfindung sind in den Unteransprüchen angegeben.

Das erfindungsgemäße Straßenbahnfahrzeug umfasst einen Fahrerstand, der einen Fahrersitz sowie ein Geschränk aufweist. Erfindungsgemäß ist eine klappbare Sitzeinrichtung in ein seitlich Geschränk einschiebbar.

Mit dieser Erfindung wird erreicht, dass der verfügbare Raum im Fahrerstand optimal ausgenutzt werden kann. Insbesondere erfordert die zusätzliche Sitzeinrichtung im aufgeklappten Zustand nur geringen Raumbedarf im Fahrerstand und beansprucht im zugeklappten Zustand überhaupt keinen zusätzlichen Raum. Dies ist insofern von besonderer Bedeutung, als der Sitz meist nicht benötigt wird und nur für den selten vorkommenden Fall der Ausbildung gelegentlich in die Nutzposition gebracht wird. Ein Fahrerstand eines Straßenbahnfahrzeuges ist im Allgemeinen recht klein, so dass der verfügbare Raum optimal ausgenutzt werden muss. Aus Sicherheitsgründen ist es außerdem erforderlich, dass sich die sich im Fahrerstand befindende(n) Person(en) dann, wenn Gefahr droht, aus dem Fahrerstand sehr schnell in Sicherheit bringen können muss/müssen. Falls die zusätzliche Sitzeinrichtung daher nicht benötigt wird, etwa wenn die Sitzeinrichtung gemäß der Erfindung für einen Fahrlehrer vorgesehen ist, sich im Fahrerstand aber kein Fahrlehrer befindet, ist der zur Verfügung stehende Raum vollständig frei zu halten. Selbst dann, wenn eine herkömmliche Sitzeinrichtung klappbar ist und außerhalb der Gebrauchsphasen zugeklappt ist, beansprucht diese zusätzlichen Raum. Dies würde ein Sicherheitsrisiko darstellen.

In jedem Fahrerstand befindet sich ein Geschränk, das dazu dient, unterschiedliche Einrichtungsgegenstände und andere Gegenstände aufzunehmen. Beispielsweise stellt das Geschränk typischerweise eine Verkleidung für die sich im Fahrerstand befindenden elektrischen und elektronischen Einrichtungen dar, die beispielsweise darin in Kabelkanälen verlegt sind. Dies schließt u.a. auch die für den Anschluss des Fahrlehrerpultes erforderlichen elektrischen Installationen ein. Hierzu kann im Geschränk zusätzlich der Fahrlehrerpultstecker untergebracht sein. Weiterhin sind darin üblicherweise Belüftungs- und Klimatisierungseinrichtungen untergebracht. Außerdem bietet das Geschränk Platz für Hilfsmittel, wie Wameinrichtungen, etwa Warndreiecke, eine Kühlbox, Fahrkeile usw. Das Geschränk bildet ferner einen Teil der Innenverkleidung des Fahrerstandes. Damit kann ein ansprechendes Erscheinungsbild des Fahrerstandes erzielt werden. Das Geschränk ist sowohl im Frontbereich des Fahrerstandes als auch seitlich vorgesehen.

Das Geschränk dient erfindungsgemäß dazu, die klappbare Sitzeinrichtung aufzunehmen. Dadurch belegt die klappbare Sitzeinrichtung dann keinen zusätzlichen Raum im Fahrerstand, wenn sich diese in der Parkposition befindet. In diesem Falle wird der Fluchtweg für den Fahrer im Gefahrenfalle freigehalten, so dass dessen Sicherheit gewährleistet ist. Außerdem wird das optische Erscheinungsbild des Fahrerstandes verbessert.

Die klappbare Sitzeinrichtung ist in das seitliche Geschränk einschiebbar. Somit wird eine besonders Platz sparende Überführung der Sitzeinrichtung von der Nutzposition in die Parkposition und umgekehrt erreicht. Denn für die Überführung in die Nutzposition ist die Sitzeinrichtung lediglich aus dem Geschränk heraus zu ziehen oder für die Überführung in die Parkposition in das Geschränk hinein zu schieben. In der Nutzposition ist die Sitzeinrichtung in dem Geschränk nicht versenkt. Durch die translatorische Operation bei der Überführung wird ein wesentlich geringerer Manövrierraum als bei einer mittels Schwenkbewegung versenkbaren Sitzeinrichtung beansprucht. Letzteres gilt beispielsweise für den in US 2003/0193205 A1 beschriebenen Sitz, der in eine Mulde im Fahrzeugboden eingeschwenkt werden kann. Somit wird die Sitzeinrichtung gemäß der vorliegenden Erfindung wie eine Lade bzw. Schublade in das Geschränk eingeschoben bzw. aus diesem herausgezogen.

Ferner befindet sich die klappbare Sitzeinrichtung im zugeklappten Zustand, wenn sie im Geschränk versenkt ist. Dadurch wird eine sehr Platz sparende Unterbringung der Sitzeinrichtung im Geschränk erreicht, weil die Größe der Lade/Schublade lediglich nach Maßgabe der Projektionsfläche der zugeklappten Sitzeinrichtung ausgelegt werden muss. Die Sitzeinrichtung befindet sich daher in der Parkposition in eingeklapptem Zustand in horizontaler Ausrichtung in dem Geschränk. Somit zeichnet sich die erfindungsgemäße Sitzeinrichtung durch die besonders Platz sparende waagerechte Kinematik und Unterbringung im seitlichen Geschränk des Fahrerstandes aus.

In einer bevorzugten Ausführungsform der Erfindung bildet das Geschränk eine Halterung für die Sitzeinrichtung in der Nutzposition. Somit ist eine zusätzliche Halterung für die Sitzeinrichtung in dieser Position entbehrlich.

Weiterhin weist die klappbare Sitzeinrichtung bevorzugt eine Sitzfläche und eine verschwenkbare Rückenlehne auf. Die verschwenkbare Rückenlehne liegt im zugeklappten Zustand der klappbaren Sitzeinrichtung vorzugsweise an der Sitzfläche an. Die Sitzfläche und die Rückenlehne können in üblicher Art und Weise als gepolsterte Elemente ausgebildet sein, etwa mit einem Rahmen oder einer Grundplatte, auf der sich eine Schaumstoffpolsterung und eine Kunststoffbespannung befinden. Das Haltegestell besteht vorzugsweise aus Stahl und ist mit Kunststoff überzogen, beispielsweise pulverbeschichtet.

Um zu gewährleisten, dass die Sitzeinrichtung in der Parkposition im Geschränk bleibt und nicht versehentlich herausfährt, kann sie in der Parkposition arretierbar sein. Gleichermaßen ist die Sitzeinrichtung in der Nutzposition vorzugsweise arretierbar, um zu gewährleisten, dass die auf der Sitzeinrichtung sitzende Person insbesondere während der Fahrt des Schienenfahrzeugs einen sicheren Halt hat. Unter einer Arretierung sind im vorliegenden Falle sowohl eine komplette Verriegelung als auch das Vorsehen eines mechanischen Widerstandes gegenüber einer Zugkraft beim Herausziehen der Sitzeinrichtung aus dem Geschränk bzw. eines mechanischen Widerstandes gegenüber einer Schubkraft beim Hineinschieben der Sitzeinrichtung in das Geschränk zu verstehen.

Um die Sitzeinrichtung im Geschränk einfach versenken und aus diesem einfach wieder herausfahren zu können, ist sie im zugeklappten Zustand vorzugsweise mittels Teleskopschienen in das Geschränk einfahrbar und aus dem Geschränk ausfahrbar. Hierzu können insbesondere doppelausziehbare Teleskopschienen verwendet werden. Die Teleskopschienen sind insbesondere so auszulegen, dass sie zur Aufnahme von schweren Lasten, insbesondere zur Aufnahme einer Person auf der Sitzeinrichtung, geeignet sind. Die Teleskopschienen sind im Geschränk in geeigneter Weise befestigt.

Die vorgenannten Arretierungsfunktionen sind vorzugsweise durch geeignete Merkmale der Teleskopschienen realisiert. Beispielsweise können die Teleskopschienen so ausgelegt sein, dass die Schublade nur gegen einen leichten Widerstand geöffnet werden kann. Hierzu dient ein Kunststoffteil an einem Ende der Teleskopschiene, das an einem der Schienenteile angebracht und zu einem benachbarten in reibschlüssiger Verbindung steht. In diesem Falle muss zum Öffnen der Schublade eine geringfügig erhöhte Zugkraft aufgewendet werden. Diese Ausführungsform ermöglicht eine leichte Arretierung der Schublade in der Parkposition. Alternativ kann auch vorgesehen sein, dass die Teleskopschiene in geschlossener Position mittels eines internen Mechanismus' komplett verriegelt wird. Ein selbständiges Herauslaufen der Sitzeinrichtung aus dem Geschränk wird durch diese Ausführungsformen vermieden. Dadurch kann auf einen zusätzlichen externen Verschluss verzichtet werden. In entsprechender Weise kann vorgesehen sein, dass die Teleskopschiene in geöffneter Position mittels eines weiteren internen Mechanismus' komplett verriegelt wird. Ferner kann auch vorgesehen sein, dass die Teleskopschiene, wie im Falle eines leichten Widerstandes gegen ein Herausziehen, so ausgelegt ist, dass die Schublade in vollständig geöffnetem Zustand einen leichten Widerstand gegen eine Schubkraft ausübt, so dass ein selbsttätiges Hineingleiten der Sitzeinrichtung in das Geschränk nicht ohne Weiteres stattfinden kann. Auch diese Ausführungsform kann mittels eines Kunststoffteils an einem Ende der Teleskopschiene realisiert sein, das an einem der Schienenteile angebracht ist und zu einem benachbarten in reibschlüssiger Verbindung steht.

Ferner kann auch vorgesehen sein, dass die Teleskopschienen kurz vor dem Endanschlag per Federkraft vollständig eingezogen werden.

Weiterhin kann vorgesehen sein, dass das Überführen der Sitzeinrichtung von der Parkposition in die Nutzposition durch eine Federeinrichtung unterstützt wird, d.h. dass die Sitzeinrichtung selbsttätig aus dem Geschränk herausfährt, oder alternativ dass das Überführen der Sitzeinrichtung von der Nutzposition in die Parkposition durch eine Federeinrichtung unterstützt wird, d.h. dass die Sitzeinrichtung selbsttätig in das Geschränk hinein fährt. Im ersteren Falle kann die Sitzeinrichtung nur gegen eine Federkraft in das Geschränk eingeschoben werden. Hierzu wird vorzugsweise eine Druckfeder verwendet. Im letzteren Falle fährt die Sitzeinrichtung von selbst wieder in die Parkposition ein und kann nur gegen die Federkraft aus der Parkposition in die Nutzposition befördert werden. In diesem Falle wird vorzugsweise eine Zugfeder verwendet.

Im Falle einer selbsttätigen Überführung der Sitzeinrichtung von der Parkposition in die Nutzposition durch Federkraft sind natürlich die zuvor beschriebenen Mittel zur Arretierung der Sitzeinrichtung in der Nutzposition nicht unbedingt erforderlich. Allerdings ist in diesem Falle eine Arretierung in der Parkposition notwendig, um die Sitzeinrichtung in der Parkposition im Geschränk zu halten. Denn die Federeinrichtung gewährleistet, dass die Sitzeinrichtung in der Nutzposition verbleibt und nur unter Kraftaufwendung im Geschränk versenkt werden kann. Andererseits sind im Falle einer selbsttätigen Überführung der Sitzeinrichtung von der Nutzposition in die Parkposition durch Federkraft natürlich die zuvor beschriebenen Mittel zur Arretierung der Sitzeinrichtung in der Parkposition nicht unbedingt erforderlich. Allerdings ist in diesem Falle eine Arretierung in der Nutzposition notwendig, um die Sitzeinrichtung in dieser Position zu halten.

Die letztgenannte Alternative ist aus Sicherheitsgründen besonders vorteilhaft, weil der Fluchtweg vom Fahrersitz zur Zugangstür im Fahrerstand in einer Notsituation sehr schnell frei wird, weil sich die zusätzliche Sitzeinrichtung im Fahrerstand einfach durch Lösen der Arretierung durch die Federwirkung selbsttätig im Geschränk versenkt.

Die Federeinrichtung kann insbesondere unmittelbar auf die Teleskopschienen wirken und hierzu an den Teleskopschienen befestigt sein. Die Federeinrichtung ist vorzugsweise eine Gasfedereinrichtung, wobei die Gasfedereinrichtung insbesondere eine Gasdruckfedereinrichtung bzw. eine Gaszugfedereinrichtung ist.

Die klappbare Sitzeinrichtung ist vorzugsweise in einer aus dem Geschränk ausgefahrenen Position aufklappbar. Somit wird die Sitzeinrichtung in diesem Falle aus dem Geschränk zunächst herausgezogen, wobei sie noch im zugeklappten Zustand ist. Erst danach wird die Sitzeinrichtung aufgeklappt, d.h. vorzugsweise wird die Rückenlehne der Sitzeinrichtung hochgeklappt.

Weiterhin weist das Geschränk eine horizontale Sichtoberfläche auf. Diese kann insbesondere von einer Pultplatte gebildet sein. Die Sitzeinrichtung bildet in diesem Falle in der Parkposition zumindest einen Teil der horizontalen Sichtoberfläche der Pultplatte. Insbesondere kann die Rückseite der Rückenlehne in der Parkposition den von der Sitzeinrichtung gebildeten Teil der horizontalen Sichtfläche des Geschränks bilden. Dies ist dann der Fall, wenn die Sitzeinrichtung etwa in Höhe des oberen Teils des Geschränks angebracht ist. Hierzu befindet sich die Sitzeinrichtung vorzugsweise im zugeklappten Zustand.

In einer alternativen Ausführungsform der Erfindung weist das Geschränk eine horizontale Sichtoberfläche auf, etwa eine Pultplatte, wobei die Sitzeinrichtung in der Parkposition unterhalb der horizontalen Sichtoberfläche der Pultplatte im Geschränk versenkbar ist. In diesem Falle bildet die Sichtoberfläche des Geschränks eine einheitliche Fläche. Die Sitzeinrichtung ist somit unterhalb der Sichtoberfläche der Pultplatte im Geschränk untergebracht.

Die Erfindung wird nachfolgend an Hand von Ausführungsbeispielen näher erläutert, die in den Figuren schematisch dargestellt sind. Die Erfindung ist jedoch nicht auf die Beispiele beschränkt. In den Figuren bezeichnen gleiche Bezugszeichen jeweils gleiche oder funktionsgleiche Elemente bzw. hinsichtlich ihrer Funktionen einander entsprechende Elemente. Es zeigen im Einzelnen:
- Fig. 1: einen Fahrerstand eines Straßenbahnfahrzeugs mit einer Fahrersitzeinrichtung in perspektivischer Darstellung etwa von vom, wobei sich die zusätzliche Sitzeinrichtung im Geschränk in der Parkposition befindet;
- Fig. 2: einen Teil des Fahrerstandes von Fig. 1 durch die Zugangstür des Fahrerstandes hindurch dargestellt, wobei sich die zusätzliche Sitzeinrichtung im Geschränk in der Parkposition befindet;
- Fig. 3: den Fahrerstand des Straßenbahnfahrzeugs von Fig. 1, wobei sich die zusätzliche Sitzeinrichtung in der Nutzposition befindet;
- Fig. 4: einen Teil des Fahrerstandes in der Ansicht von Fig. 2, wobei sich die zusätzliche Sitzeinrichtung in der Nutzposition befindet;
- Fig. 5: den Fahrerstand des Straßenbahnfahrzeugs von Fig. 1 in einer Draufsicht, wobei sich die zusätzliche Sitzeinrichtung in der Nutzposition befindet;
- Fig. 6: die zusätzliche Sitzeinrichtung in perspektivischer Darstellung von oben im aufgeklappten Zustand in der Nutzposition;
- Fig. 7: die zusätzliche Sitzeinrichtung in perspektivischer Darstellung von unten im aufgeklappten Zustand in der Nutzposition;
- Fig. 8: die zusätzliche Sitzeinrichtung in perspektivischer Darstellung von oben im zugeklappten Zustand;
- Fig. 9: eine Variante der Unterbringung der zusätzlichen Sitzeinrichtung im Geschränk in perspektivischer Ansicht.

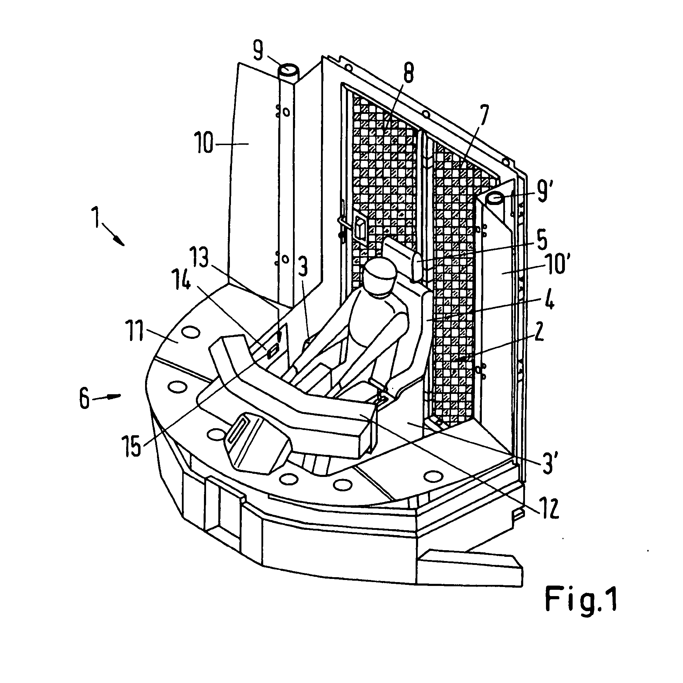

Fig. 1 zeigt einen Fahrerstand 1 des Straßenbahnfahrzeugs, beispielsweise einer Straßenbahn. Im Fahrerstand befinden sich ein Fahrersitz 2 mit seitlichen Lehnen 3, 3' und einer Rückenlehne 4, wobei die Rückenlehne zusätzlich auch eine Kopfstütze 5 umfasst, ferner ein Geschränk 6, das als Verkleidung für elektrische, elektronische Installationen sowie Belüftungs- und Klimatisierungseinrichtungen ausgebildet ist und außerdem zur Unterbringung diverser weiterer Einrichtungen und Gerätschaften dient. Das Geschränk erstreckt sich entlang drei Seiten des Fahrerstandes. Die Geschränkwände bestehen vorzugsweise aus HPL-Platten (HPL = high pressure laminate, mit Kunststoffharz getränktes und verpresstes Papier). Oberhalb des Geschränks sind Sichtscheiben vorgesehen, die in dieser Figur jedoch nicht gezeigt sind. Der Fahrerstand ist nach hinten zum Fahrgastraum durch eine gegebenenfalls transparente Wand 7 sowie eine gegebenenfalls transparente Tür 8 abgetrennt. In den an die Abtrennwand sowie Tür angrenzenden Bereichen befinden sich tragende Teile 9, 9', die von einer Wandverkleidung 10, 10' nach innen abgedeckt sind.

Das Geschränk 6 weist auf der Oberseite eine Pultplatte 11 auf (ebenfalls vorzugsweise eine HPL-Platte). Ferner erhebt sich aus dem vorderen Teil des Geschränks das Bedienpult 12 für den Fahrer.

Auf der (in Fahrtrichtung gesehen) rechten Seite des Fahrersitzes 2 ist im Geschränk 6 eine Schublade 13 vorgesehen, die eine zusätzliche Sitzeinrichtung aufnimmt (in dieser Darstellung nicht sichtbar). In dieser Figur ist lediglich die Frontverkleidungsplatte 14 dieser Sitzeinrichtung sichtbar. Diese Frontverkleidungsplatte ist mit einer Griffeinrichtung 15 ausgerüstet, um die zusätzliche Sitzeinrichtung aus dem Geschränk manuell leicht herausziehen zu können. Diese zusätzliche Sitzeinrichtung kann insbesondere als Sitz für einen Fahrlehrer dienen, der während der Fahrt den Fahrschüler, der auf dem Fahrersitz 2 sitzt, überwacht und hierzu neben ihm Platz nimmt.

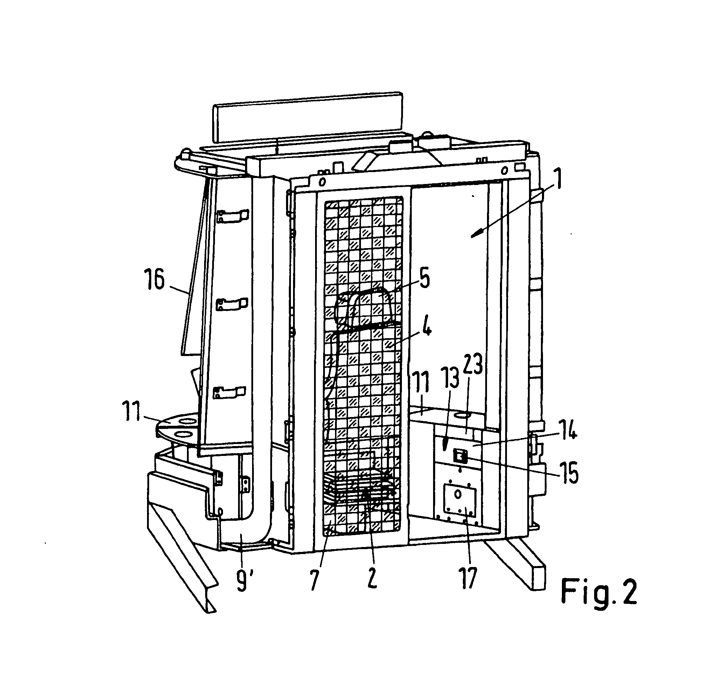

In gleicher Weise zeigt Fig. 2 den Fahrerstand 1, in diesem Falle jedoch in einer anderen Perspektive, nämlich vom Fahrgastraum aus durch die geöffnete Tür (nicht dargestellt). Zusätzlich ist eine der Frontscheiben 16 des Straßenbahnfahrzeugs, die den Fahrerstand nach vorn abgrenzt, gezeigt. Unterhalb der Schublade 13 ist ein aufklappbares Fach 17 dargestellt, das den Fahrlehrerpultstecker enthält.

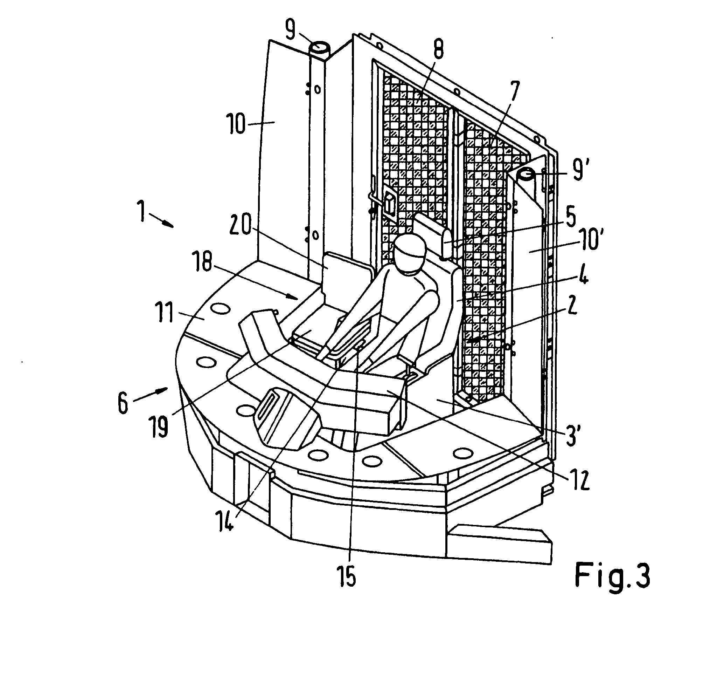

Fig. 3 zeigt den Fahrerstand 1 mit der zusätzlichen Sitzeinrichtung 18 in der Nutzposition und im aufgeklappten Zustand. Die Frontverkleidungsplatte 14 und die daran angebrachte Griffeinrichtung 15 sind durch den Fahrer halb verdeckt gerade noch erkennbar. Diese zusätzliche Sitzeinrichtung weist eine Sitzfläche 19 und eine verschwenkbare Rückenlehne 20 auf. Letztere ist in dieser Figur im aufgestellten Zustand wiedergegeben. Die zusätzliche Sitzeinrichtung wird zur Überführung in die Parkposition in das Geschränk 6 eingeschoben. Hierzu muss die Rückenlehne nach unten geklappt sein und an der Sitzfläche anliegen. In diesem eingeklappten Zustand kann diese zusätzliche Sitzeinrichtung dann in das Geschränk eingeschoben werden. Im eingeschobenen Zustand ist dann lediglich die Frontplatte 14 sichtbar, die einen Teil der Innenverkleidung des Fahrerstandes durch das Geschränk 6 bildet.

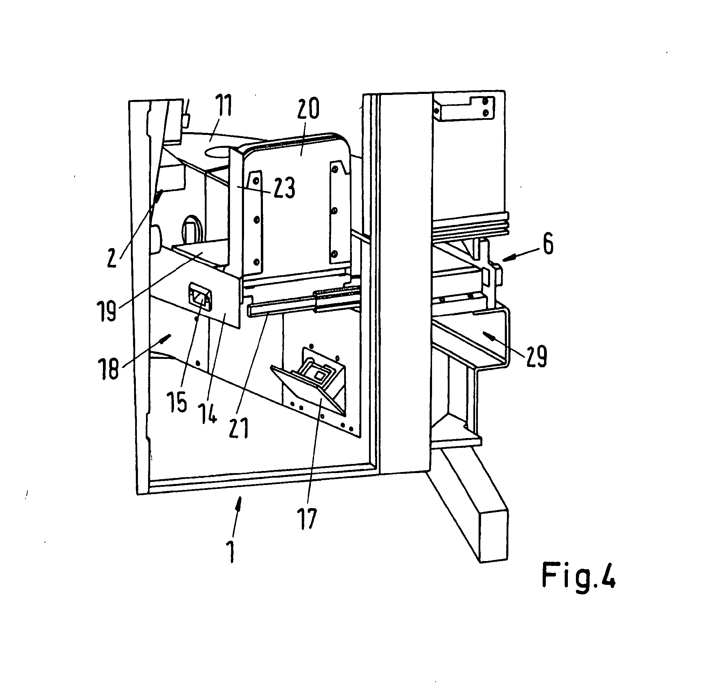

Fig. 4 zeigt einen Teil des Fahrerstandes 1, durch die Zugangstür (nicht dargestellt) gesehen. Im linken Türausschnitt ist gerade noch der rechte Teil des Fahrersitzes 2 zu erkennen. Weiterhin ist das Geschränk 6 teilweise sichtbar, wobei von diesem in dieser Figur auch ein Teil der inneren Konstruktion dargestellt ist

Ferner ist die zusätzliche Sitzeinrichtung 18 in der Nutzposition und im aufgeklappten Zustand dargestellt. Diese zusätzliche Sitzeinrichtung besteht aus der Sitzfläche 19 und der Rückenlehne 20, die an der Sitzfläche verschwenkbar befestigt ist in der Darstellung von Fig. 4 ist die Rückenlehne aufgestellt gezeigt. An der linken Seite der zusätzlichen Sitzeinrichtung schließt diese mit der Frontplatte 14 ab, an der sich die Griffeinrichtung 15 befindet Die zusätzliche Sitzeinrichtung ist an zwei Teleskopschienen 21 befestigt, von denen eine im ausgezogenen Zustand dargestellt ist. Die Teleskopschienen sind vorzugsweise doppelausziehbar, um eine ausreichende Belastbarkeit des Sitzes zu gewährleisten. Die Teleskopschienen sind innerhalb des Geschränks 6 an einer Tragkonstruktion 29 befestigt. Wird die Rückenlehne nach vom auf die Sitzfläche geklappt, so dass die Rückenlehne an der Sitzfläche anliegt, kann die zusätzliche Sitzeinrichtung, wie eine Schublade in das Geschränk eingeschoben werden.

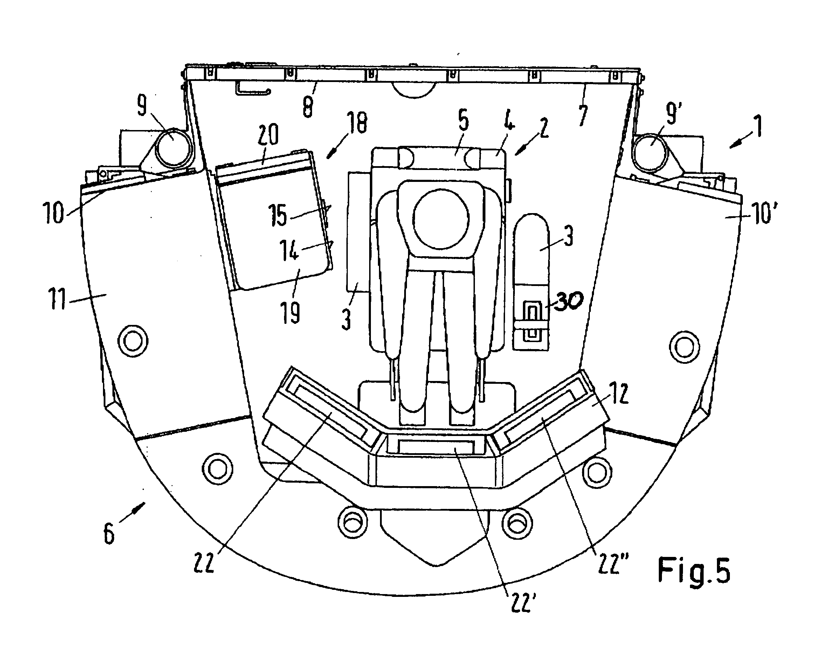

In einer weiteren Darstellung (Fig. 5) ist der Fahrerstand 1 von oben gesehen gezeigt. Zusätzlich zu den Fig. 1-4 zeigt Fig. 5 Monitore 22. 22', 22" im Bedienpult 12 für den Fahrer sowie einen Bedienungshebel 30 in der Seitenlehne 3.

Die zusätzliche Sitzeinrichtung 18 ist auch in dieser Darstellung im aufgeklappten Zustand in der Nutzposition gezeigt

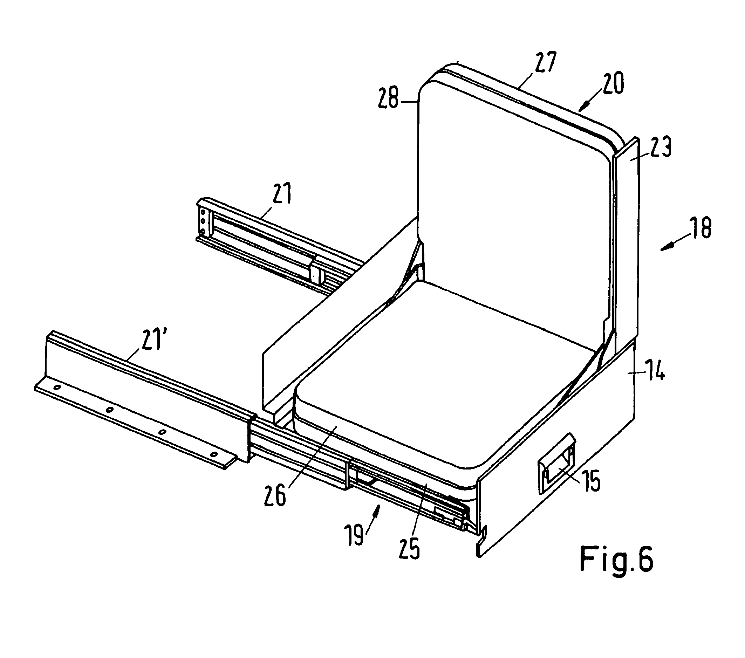

Fig. 6 zeigt die zusätzliche Sitzeinrichtung 18 in perspektivischer Darstellung von oben im aufgeklappten Zustand in der Nutzposition. Die Sitzfläche 19 der Sitzeinrichtung ist an zwei doppelausziehbaren Teleskopschienen 21, 21' befestigt und kann über diese aus dem Geschränk (nicht gezeigt) herausgezogen werden. Diese Teleskopschienen werden von entsprechenden Tragkonstruktionen im Geschränk gehalten. Die Frontplatte 14 ist vorzugsweise eine HPL-Platte. Sie ist an der Sitzfläche befestigt. Eine weitere an der Rückenlehne 20 befestigte Stirnplatte 23, ebenfalls eine HPL-Platte, bildet eine Verkleidungsplatte (Fig. 2). Die Sitzfläche besteht aus einem starren Sitzflächen- Tragelement 25 und einem Sitzpolster 26. In gleicher Weise besteht die Rückenlehne aus einem starren Rückenlehnen-Tragelement 27 und einem Rückenlehnen-Polster 28. Das Rückenlehnen- Tragelement ist vorzugsweise eine HPL-Platte.

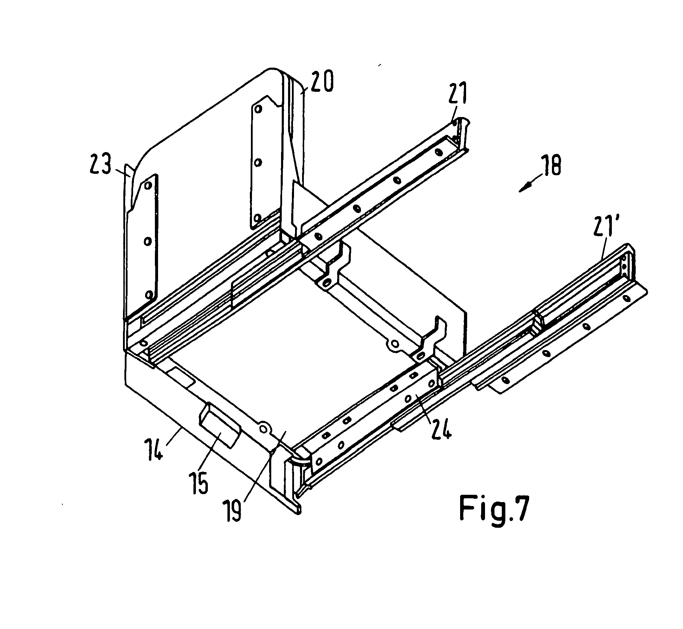

Fig. 7 zeigt die zusätzliche Sitzeinrichtung 18 ebenfalls im aufgeklappten Zustand und in der Nutzposition, allerdings von der Unterseite gesehen. Dort ist die Befestigung der Sitzeinrichtung über Winkelbleche 24 an den Teleskopschienen 21, 21' dargestellt.

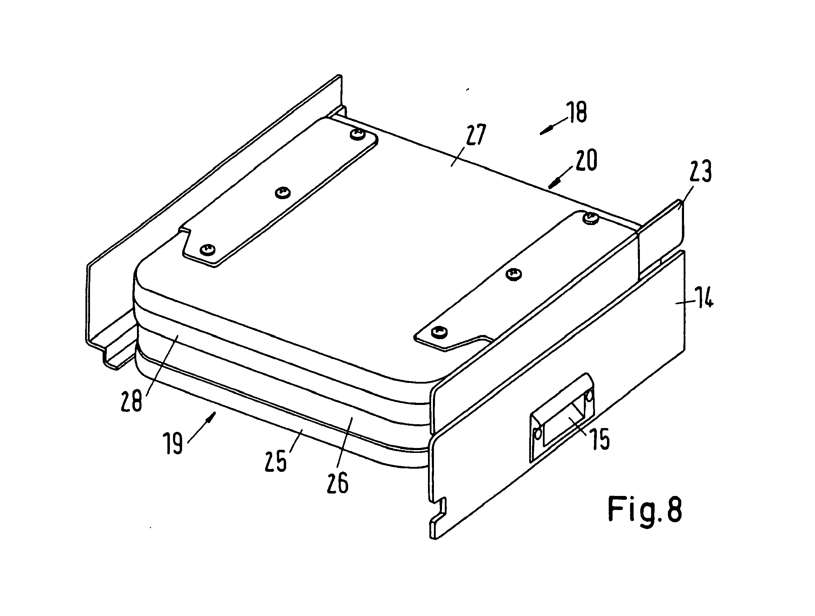

Fig. 8 zeigt die Sitzeinrichtung 18 im eingeklappten Zustand (ohne Teleskopschienen). In diesem Zustand befindet sich die Sitzeinrichtung in der Parkposition im Geschränk.

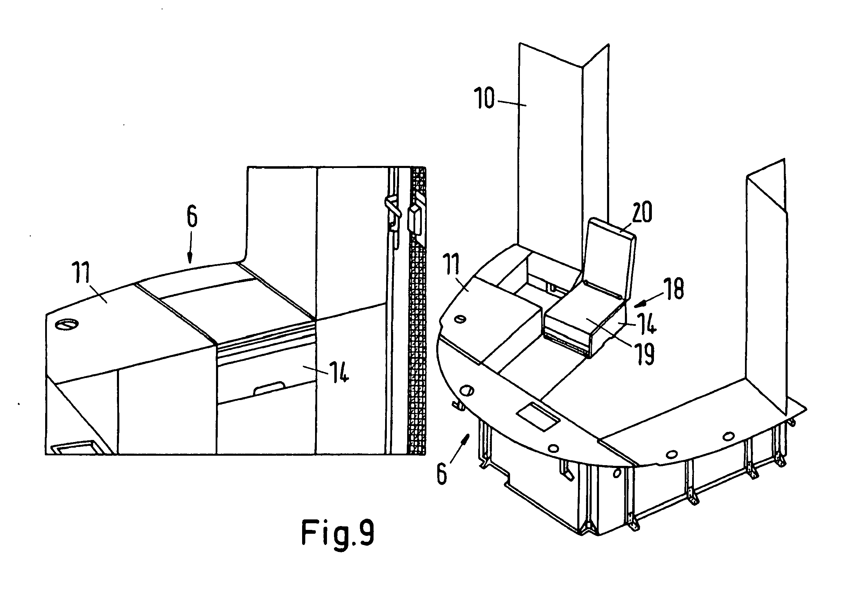

In Fig. 9 ist eine Variante für die Unterbringung der zusätzlichen Sitzeinrichtung 18 im Geschränk 6 dargestellt. Die Sitzeinrichtung ist in der linken Darstellung in das Geschränk eingeschoben und befindet sich somit in der Parkposition. In der rechten Darstellung ist die Sitzeinrichtung aus dem Geschränk herausgezogen und aufgeklappt und befindet sich in der Nutzposition. Anders als im Falle der Ausführungsform, die in den Fig. 1-3 und 5 gezeigt ist, bildet die Rückseite der Rückenlehne (vorzugsweise eine HPL-Platte) im eingeschobenen Zustand die Pultoberfläche 11 des Geschränks.

## Patentansprüche

1. Straßenbahnfahrzeug, umfassend einen Fahrerstand (1) mit einer klappbaren Sitzeinrichtung (18), die eine Sitzfläche (19) und eine verschwenkbare Rückenlehne (20) umfasst, wobei die klappbare Sitzeinrichtung in einem zugeklappten Zustand, bei dem die verschwenkbare Rückenlehne (20) an der Sitzfläche (19) anliegt, in ein seitliches Geschränk (6) einschiebbar ist, wobei die klappbare Sitzeinrichtung (18) durch Verschwenken der verschwenkbaren Rückenlehne (20) zur Anlage auf die Sitzfläche (19) und Einschieben der Sitzeinrichtung (18) im zugeklappten Zustand in das seitliche Geschränk (6) durch eine translatorische Operation von einer Nutzposition in eine Parkposition überführbar ist.

2. Straßenbahnfahrzeug nach einem der vorstehenden Ansprüche, **dadurch gekennzeichnet, dass** das Geschränk (6) eine Halterung für die Sitzeinrichtung (18) in der Nutzposition bildet.

3. Straßenbahnfahrzeug nach einem der vorstehenden Ansprüche, **dadurch gekennzeichnet, dass** die klappbare Sitzeinrichtung (18) in der Parkposition arretierbar ist.

4. Straßenbahnfahrzeug nach einem der vorstehenden Ansprüche, **dadurch gekennzeichnet, dass** die klappbare Sitzeinrichtung (18) in der Nutzposition arretierbar ist.

5. Straßenbahnfahrzeug nach einem der vorstehenden Ansprüche, **dadurch gekennzeichnet, dass** die klappbare Sitzeinrichtung (18) im zugeklappten Zustand mittels Teleskopschienen (21, 21') in das Geschränk (6) einfahrbar und aus dem Geschränk ausfahrbar ist.

6. Straßenbahnfahrzeug nach einem der vorstehenden Ansprüche, **dadurch gekennzeichnet, dass** das Überführen der Sitzeinrichtung (18) von der Nutzposition in die Parkposition durch eine Federeinrichtung unterstützt wird.

7. Straßenbahnfahrzeug nach Anspruch 6, **dadurch gekennzeichnet, dass** die Federeinrichtung eine Gasfedereinrichtung ist.

8. Straßenbahnfahrzeug nach einem der vorstehenden Ansprüche, **dadurch gekennzeichnet, dass** die klappbare Sitzeinrichtung (18) in einer aus dem Geschränk (6) ausgefahrenen Position aufklappbar ist.

9. Straßenbahnfahrzeug nach einem der vorstehenden Ansprüche, **dadurch gekennzeichnet, dass** das Geschränk (6) eine horizontale Sichtoberfläche (11) aufweist und dass die Sitzeinrichtung in der Parkposition zumindest einen Teil der horizontalen Sichtoberfläche bildet.

10. Straßenbahnfahrzeug nach Anspruch 9, **dadurch gekennzeichnet, dass** die Rückseite (27) der Rückenlehne (20) in der Parkposition der klappbaren Sitzeinrichtung (18) im zugeklappten Zustand zumindest einen Teil der horizontalen Sichtoberfläche (11) bildet.

11. Straßenbahnfahrzeug nach einem der Ansprüche 1 - 8, **dadurch gekennzeichnet, dass** das Geschränk (6) eine horizontale Sichtoberfläche (11) aufweist und dass die Sitzeinrichtung (18) in der Parkposition unterhalb der horizontalen Sichtoberfläche im Geschränk versenkbar ist.

## Claims

1. Trolley car vehicle comprising an operator's cab (1) with a collapsible seating arrangement (18) which has a seating surface (19) and a pivotable backrest (20), wherein when the collapsible seating arrangement is in collapsed state in which the pivotable backrest (20) lies on the seating surface (19), said seating arrangement can be inserted into a lateral closet (6), wherein by pivoting of the pivotable backrest (20) to rest on the seating surface (19) and by insertion of the seating arrangement (18) in collapsed state into the lateral closet (6), the collapsible seating arrangement (18) can be transferred from a usage position to a parked position by a translational operation.

2. Trolley car vehicle according to the preceding claim, **characterised in that** the closet (6) forms a holder for the seating arrangement (18) in the usage position.

3. Trolley car vehicle according to any one of the preceding claims, **characterised in that** the collapsible seating arrangement (18) can be locked in the parked position.

4. Trolley car vehicle according to any one of the preceding claims, **characterised in that** the collapsible seating arrangement (18) can be locked in the usage position.

5. Trolley car vehicle according to any one of the preceding claims, **characterised in that** the collapsible seating arrangement (18) in the collapsed position can be inserted in the closet (6) and withdrawn from the closet by means of telescopic rails (21, 21').

6. Trolley car vehicle according to any one of the preceding claims, **characterised in that** the transfer of the seating arrangement (18) from the usage position to the parked position is supported by a spring arrangement.

7. Trolley car vehicle according to claim 6, **characterised in that** the spring arrangement is a gas strut arrangement.

8. Trolley car vehicle according to any one of the preceding claims, **characterised in that** the collapsible seating arrangement (18) can be opened in a position withdrawn from the closet (6).

9. Trolley car vehicle according to any one of the preceding claims, **characterised in that** the closet (6) has a horizontal visible surface (11) and that in the parked position, the seating arrangement forms at least part of the horizontal visible surface.

10. Trolley car vehicle according to claim 9, **characterised in that** the back side (27) of the backrest (20), when the collapsible seating arrangement (18) is in the parked position, in collapsed state forms at least part of the horizontal visible surface (11).

11. Trolley car vehicle according to any one of claims 1 to 8, **characterised in that** the closet (6) has a horizontal visible surface (11) and that the seating arrangement (18), in the parked position, can be lowered into the closet below the horizontal visible surface.

## Revendications

1. Tramway, comprenant une cabine (1) équipée d'un siège rabattable (18), qui comprend une surface d'assise (19) et un dossier (20) pouvant pivoter, sachant que le siège rabattable peut être inséré dans une armoire latérale (6) dans un état fermé, dans le cadre duquel le dossier (20) pouvant pivoter repose sur la surface d'assise (19), sachant que le siège (18) rabattable peut être amené, en faisant pivoter le dossier (20) pouvant pivoter destiné à venir en appui sur la surface d'assise (19) et en insérant par glissement le siège (18) se trouvant dans l'état fermé, dans l'armoire latérale (6) par une translation d'une position d'utilisation dans une position de rangement.

2. Tramway selon l'une quelconque des revendications précédentes, **caractérisé en ce que** l'armoire (6) forme un support pour le siège (18) dans la position d'utilisation.

3. Tramway selon l'une quelconque des revendications précédentes, **caractérisé en ce que** le siège (18) rabattable peut être bloqué dans une position de rangement.

4. Tramway selon l'une quelconque des revendications précédentes, **caractérisé en ce que** le siège (18) rabattable peut être bloqué dans la position d'utilisation.

5. Tramway selon l'une quelconque des revendications précédentes, **caractérisé en ce que** le siège rabattable (18) peut être rentré à l'état fermé dans l'armoire (6) au moyen de rails télescopiques (21, 21') et peut être sorti de l'armoire.

6. Tramway selon l'une quelconque des revendications précédentes, **caractérisé en ce que** le passage du siège (18) de la position d'utilisation dans la position de rangement est soutenu par un dispositif d'amortissement.

7. Tramway selon la revendication 6, **caractérisé en ce que** le dispositif d'amortissement est un dispositif à ressort à gaz.

8. Tramway selon l'une quelconque des revendications précédentes, **caractérisé en ce que** le siège (18) rabattable peut être ouvert dans une position déployée à l'extérieur de l'armoire (6).

9. Tramway selon l'une quelconque des revendications précédentes, **caractérisé en ce que** l'armoire (6) présente une surface visible (11) horizontale, et **en ce que** le siège constitue dans la position de rangement au moins une partie de la surface visible horizontale.

10. Tramway selon la revendication 9, **caractérisé en ce que** le côté arrière (27) du dossier (20) constitue lorsque le siège (18) rabattable se trouve dans la position de rangement, à l'état fermé, au moins une partie de la surface visible (11) horizontale.

11. Tramway selon l'une quelconque des revendications 1 à 8, **caractérisé en ce que** l'armoire (6) présente une surface visible horizontale (11), et **en ce que** le siège (18) peut être abaissé dans la position de rangement, dans l'armoire sous la surface visible horizontale.
